# EUROPEAN PATENT SPECIFICATION

(11) **EP 1 177 884 B1**
(45) Date of publication and mention of the grant of the patent: **29.10.2003**
(21) Application number: 01114814.5
(22) Date of filing: 27.06.2001
(51) Int. Cl.: B29D 31/518, A43B 5/06, A43B 13/26

(54) **Shoe, in particular running shoe, and method for manufacturing the same**
Schuh, insbesondere Schuh für Laufdisziplinen, und sein Herstellungsverfahren
Chaussure, en particulier chaussure pour courir, et son procédé de fabrication

(30) Priority: 02.08.2000 DE 10037728
(43) Date of publication of application: 06.02.2002
(73) Proprietor: adidas International Marketing B.V., 1062 KR Amsterdam (NL)
(72) Inventor: Kuhtz, Gerald, 90429 Nürnberg (DE); Knoche, Bernhard, 90429 Nürnberg (DE); Knoerr, Klaus, 91094 Langensendelbach (DE)
(74) Representative: Hess, Peter K., Dipl.-Phys.

(56) References cited:
- DE-A- 2 108 204
- FR-A- 1 069 278
- US-A- 2 391 564
- US-A- 3 888 026
- US-A- 4 297 796

## Description

The present invention relates to a shoe, in particular a running shoe, and a method for its manufacture.

When shoes are constructed, in particular running shoes, a special importance is attached to the weight of the shoe. The weight is determined by the type and the quantity of the materials used. Especially in the case of running shoes which are used for competitions, there is the objective to provide a shoe which is as light as possible but which, at the same time maintains its essential properties. Examples of such properties are good traction and damping from the sole as well as a precise fit and support of the foot by the upper.

The running shoes known from the prior art mostly consist of a sole, which is formed from a layered structure. The materials of the upper consist of light fabrics which are quite often perforated for breathability. These fabrics can be made of natural as well as synthetic fibers. In view of the weight portion of the different shoe components, the sole of the running shoe is decisive for the total weight. The contribution of the material of the upper to the total weight is comparatively low.

As mentioned, the soles of conventional running shoes are characterized by layered structures which mostly consist of an outsole, a mid sole and an inner sole. The outsole conventionally consists of a non-abrasive, low-elastic material or rubber which is characterized by a high density and therefore also by a high weight. The outsole provides a good grip on the ground by its profile and its friction properties. Simultaneously, it contributes to a large increase in the weight of the running shoe which causes the runner to tire quickly especially in competition situations.

The conventionally used midsole usually consists of a cushioning material, for example EVA- or PU-foam, since this material is elastically or viscously deformable. The elasto-viscous properties are used for damping the shocks caused by the running motion and thereby protecting the joints and muscles of the runner. Additionally, damping elements can also be integrated in the midsole as, for example, gel or air cushions, in order to support the shock absorption. These complex midsole constructions consisting of foamed soles with or without additional damping elements are also characterized by a correspondingly high weight. This circumstance also conflicts with the requirement of providing a light running shoe for competitions.

US 4,297,796 and DE 3 021 129 both disclose sole constructions comprising a deformable inner sole, over which a plurality of elongated stretch-resistant strands are distributed. According to a preferred embodiment, the stretch-resistant strands form a mesh which extends over the inner sole member and an outer prim portion being disposed at an angle relative to said inner sole. With such a mechanism incorporated in a shoe, the tendency of a foot impact to produce a pronounced localized deformation, at the point of impact in the sole member, is minimized by three-dimensional force transmission activities.

Furthermore, it is suggested in the prior art, e. g. by the sports company ASICS, to provide running shoes with structured outsoles. These structured outsoles include the provision of grid-like structures defining openings extending from the outsole to the midsole.

US2391564 and US 3888026 also disclose shoe and sole constructions.

Based on the different constructions of running shoes of the prior art, the present invention is based on the problem to provide a running shoe with a sole having good damping properties and grip on the ground and a low weight at the same time.

According to claim 1, the present invention relates to a shoe, in particular a running shoe.

In contrast to the prior art, the comparatively low weight of the claimed running shoe is provided by using a known upper together with a special and very light sole construction. According to the sole construction of the present invention the sole is made without a conventional outsole. Since conventional outsoles have a relatively high weight, the total weight of the light running shoe according to the invention is dramatically reduced. The profile of the running shoe is provided by the net-like structure. This net-like structure is attached to the sole by embedding in the sole, wherein remaining free portions of the net-like structure serve as profile and provide sufficient grip of the novel running shoe on the ground.

According to claims 2 and 3, said net-like structure is formed by a three-dimensional structure of at least one light, non-abrasive material with good grip, wherein the net-like structure consists of knitted threads made of Polyester, Polyamid, Kevlar, Twaron, other plastic materials or metals.

A preferred embodiment relates to the net-like structure which is made of polyester, polyamide, kevlar, twaron (twaron is made by Akzo Nobel GmbH, Germany, and kevlar is made by DuPont, France), other plastic materials or metals. Additionally, this embodiment relates to the type of the net-like structure produced by knitting together fibers of one or more different materials to a three-dimensional structure. Depending on the type of the knit fabrics used, different net-like structures and therefore also different profiles of the sole are obtained.

Based on the different material properties and net-like structures, a sole of the running shoe is provided showing good grip, abrasion resistance and low weight.

According to two preferred embodiments of the invention, the net-like structure extends beyond the bottom side of the sole or terminates with the sole.

According to a further embodiment of the invention, the preferred net-like structure projects from the sole on the bottom side of the sole, since according to the invention, it is only embedded into the sole by vertical sub-portions. In this manner, it forms the profile of the sole.

According to a further preferred embodiment of the invention, the net-like structure terminates with the sole on the bottom side of the sole. For example, for shaping a profile of the sole, an appropriate relief corresponding to the respective requirements can be imprinted in the sole. Additionally, flex grooves can be provided which contribute to an increase in the flexibility of the sole.

According to claim 5, the sole comprises a cushioning sole layer made of a conventional damping material, in particular EVA-, PU-, rubber foam or combinations thereof.

Preferably, according to the invention, the cushioning sole layer which also forms the sole and into which the net-like structure is embedded, is made of a damping material. It especially serves for shock absorption, in order to relieve the joints and the muscles of the runner. In this case, different conventional damping materials are applicable, wherein it is also possible to integrate special damping elements into the sole.

Furthermore, according to claim 6, the invention relates to a method for manufacturing a shoe, in particular a running shoe.

The method according to the invention comprises as an essential step the manufacture of the sole of the running shoe consisting of the net-like structure and the cushioning sole layer. According to the invention, the cushioning sole layer is attached to the net-like structure by embedding during moulding. After manufacture the sole, the upper is attached to the sole by means of standard methods such as adhesive, stitching and/or tacking.

According to claims 7 and 8, the net-like structure is mounted on one of the inner surfaces of the form tool, wherein the inner surface of the form tool is shaped in a way complementary to that of the net-like structure for receiving the net-like structure.

In the manufacturing process of the sole of the running shoe, according to a preferred embodiment of the invention, the net-like structure is arranged on an inner surface shaped complementary to this net-like structure. In this manner, the adjustment how far sub-portions of the net-like structure are embedded into the cushioning sole layer can be effected.

According to claim 9, the inner surface of the form tool is structured so as to shape the bottom side of the cushioning sole layer.

Additionally, according to a further preferred embodiment of the present invention, a profile is imprinted in the sole by an additional structure of the inner surface of the form tool. According to the invention, this profile can be arbitrarily shaped corresponding to the requirements of the running shoe in order to increase the gripability and/or the flexibility of the sole. According to claim 10, said moulding of said cushioning sole layer in said form tool connects said net-like structure with said cushioning sole layer in such a manner that a part of the net-like structure extends beyond the cushioning sole layer or terminates with it.

With respect to a further preferred embodiment, the net-like structure extends beyond the cushioning sole layer or terminates with it. By using the novel manufacturing process, the profile depth can be adjusted dependent on the requirements of the ground.

According to claim 11, the cushioning sole layer is moulded in the form tool by injection or compression moulding.

Besides these standard methods, other forming methods for soles can also be applied in order to manufacture the sole of the running shoe according to the invention.

### Brief Description of the Drawings

In the following detailed description, presently preferred embodiments of the present invention are described with reference to the drawing. It shows:
- Fig. 1: side view of the running shoe according to the invention;
- Fig. 2: enlarged sectional view of a sub-portion of a first embodiment of the sole of Fig. 1;
- Fig. 3: perspective illustration of the inventive running shoe according to a second embodiment with additional profile ridges;
- Fig. 4 A-4 D: different net-like structures shown in detail;
- Fig. 5: compression moulding form tool; and
- Fig. 6: injection moulding form tool.

### Detailed Description of the Invention

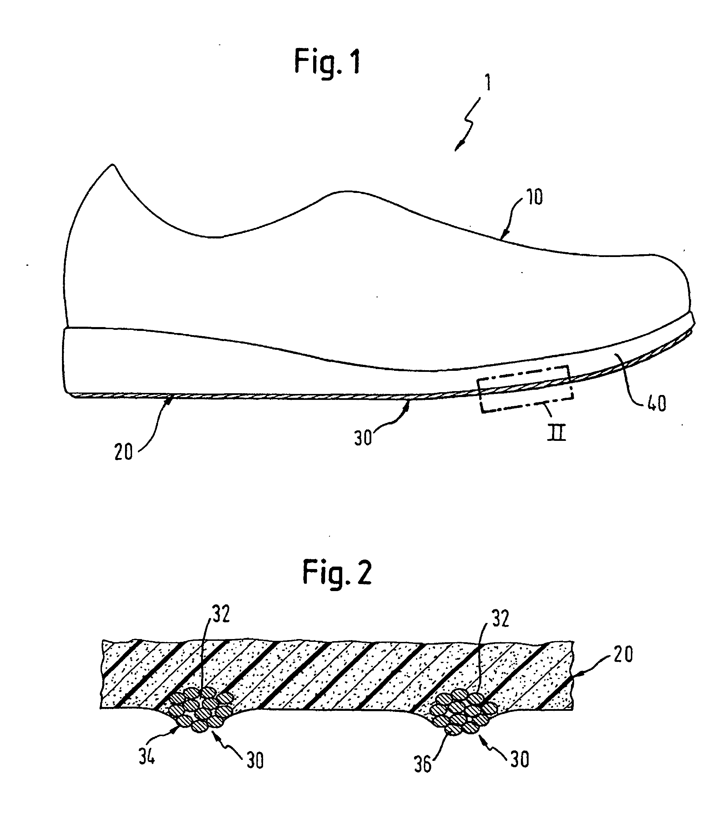

With reference to Fig. 1, the running shoe 1 according to the invention consists of an upper 10 and a sole 20. The upper 10 serves for the accommodation and support of the foot. To this end, preferably conventional materials are used for the upper 10 which ensure a precise fit and which can be additionally combined with supporting elements. These supporting elements are preferably used in the heel area of the inventive running shoe.

According to the invention, the sole 20 which is connected to the upper 10, comprises a net-like structure 30 and a cushioning sole layer 40. It is emphasized that the sole 20 does not comprise a traditional outsole made for example of rubber. The sectional enlargement of the sole 20 illustrated in Fig. 2 shows that the net-like structure 30 is embedded with vertical sub-portions 32 into the cushioning sole layer 40. By means of these vertical sub-portions 32, the inventive net-like structure 30 is attached to the cushioning sole layer 40. To this end, it is also conceivable that the net-like structure 30 is embedded in an additional sole layer which does not serve for cushioning.

According to a first preferred embodiment of the present invention vertical sub-portions 34 of the net-like structure 30 extend beyond the bottom side of the sole 20 according to the invention. Thereby, they form the profile of the sole 20.

According to the present invention, the net-like structure 30 represents a three-dimensional structure. This three-dimensional structure is preferably provided by a knit fabric of fibers of one or more different materials. The materials used are characterized by abrasion resistance, good grip and a low weight. In this manner, a sole 20 with profile is provided which ensures sufficient foot hold by its grip on the respective ground, which enables a certain lifetime of the sole by the abrasion resistance and which relieves the runner from fatigue because of its low weight. Possible materials of the knit fabrics of fibers are polyester, polyamide, kevlar (made by DuPont, France), twaron (made by Akzo Nobel GmbH, Germany), other plastic materials or metals. Apart from these materials, other fabrics are also conceivable which meet the above mentioned requirements. Furthermore, it is possible that the net-like structure 30 is formed in a different way, i. e. other than as a knit fabric of fibers, for example, by shaped plastic materials or other materials.

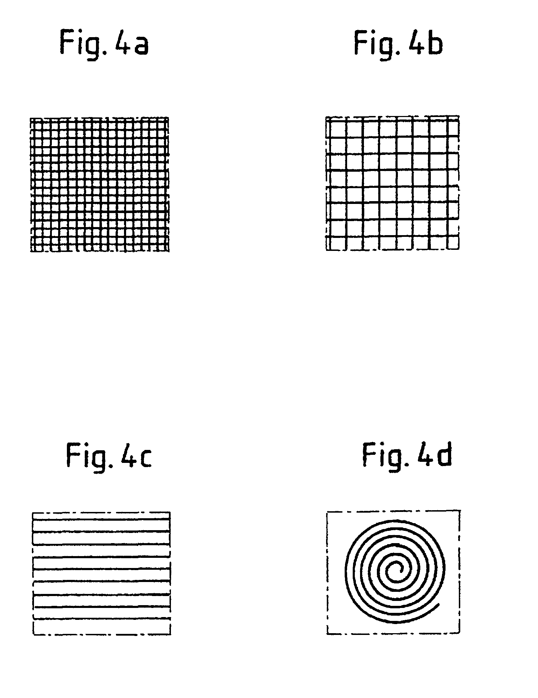

According to the invention, the profile of the sole 20 is formed by the net-like structure 30 according to a first preferred embodiment. Therefore, the profile of the sole 20 depends on, for instance, the mesh size and the mesh shape of the net-like structure 30. Additionally, different profiles are realized by varying the kind of spinning used to knit the fibers, by the number and arrangement of burls in the knit fabric and by the strength of the knit fabrics. Examples of the different net-like structures 30 are shown in Figs. 4 A-4 D. It is also preferable to combine different net-like structures 30 in order to adapt the profile to different requirements, for example, in the heel and the forefoot area.

Preferably, according to the invention, the sole 20 is formed by the net-like structure 30 and the cushioning sole layer 40. The net-like structure 30 serves as profiling for the sole 20. Shocks induced by the natural running motion are dampened by the cushioning sole layer 40. Thereby, in particular the joints and the muscles of the runner are protected. Preferably, the cushioning sole layer 40 has good damping properties and a low weight. Preferably according to the invention, conventional damping materials such as example EVA-, PU-, rubber foam or combinations thereof are used for these purposes. It is also possible to form the sole 20 in combination with the energy management system of German patent DE 19 914 472 of the applicant. Furthermore, different damping elements known from the prior art can be combined with the sole 20 as long as they meet the requirements with respect to the weight of the inventive running shoe.

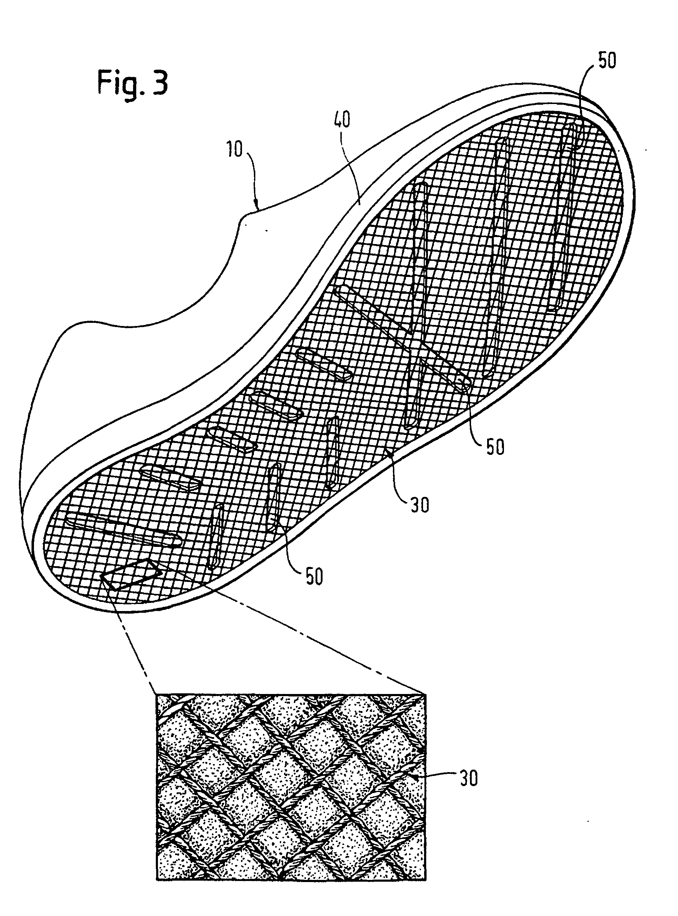

According to a further preferred embodiment of the running shoe 1 (shown in Fig. 3), the net-like structure 30 ends together with the cushioning sole layer 40 at the bottom side of the sole 20. In this way, the net-like structure 30 protects the running shoe 1 from a too fast abrasion in the sole area. For ensuring a sufficient profile in the sole 20, different structures in the shape of profile ridges 50 are imprinted into the cushioning sole layer 40. Also in this way, an inventive running shoe results which supports the foot of the runner, provides sufficient foot hold and grip and additionally relieves from fatigue the runner because of its very low weight.

Preferably, it is also possible to imprint flex grooves in the cushioning sole layer 40 which contribute to increase the flexibility of the sole 20.

Furthermore, the invention relates to a method of manufacturing a shoe, in particular a running shoe. The manufacturing method comprises the following steps: Inserting a net-like structure 30 in a form tool 70, moulding of a plastic material in said form tool 70 to provide a cushioning sole layer 40, wherein sub-portions 32 of the net-like structure 30 are embedded into said cushioning sole layer 40 and attaching an upper 10 to said cushioning sole layer 40.

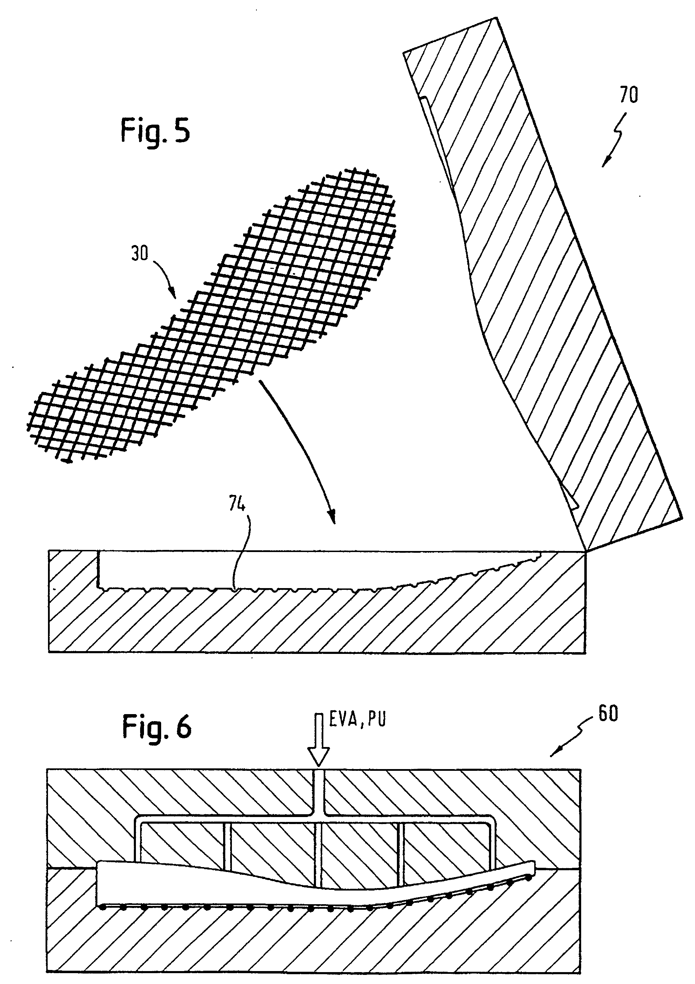

The sole 20 of the running shoe 1 according to the invention is manufactured using a compression moulding method within a form tool 70 according to a preferred embodiment of the present invention. The form tool 70 determines the later shape of the sole 20. Within the scope of this method, the net-like structure 30 is first inserted in the form tool 70 adjacent to the inner surface 72 which is arranged opposite to what will become the outer surface of the sole 20 (see Fig. 5). According to a further embodiment of the method according to the invention, it is preferred to mount the net-like structure 30 on said inner surface 72 of the form tool 70. It is further preferred to shape the inner surface 72 of the form tool 70, so that it is complementary with the net-like structure 30 according to the invention. In this way, the projecting vertical sub-portions 34 are covered by the complementary structure 74 of the inner surface 72 of the form tool 70, so that they are not embedded into the cushioning sole layer 40 during manufacture.

According to a further embodiment of the manufacturing method according to the invention, the projecting vertical sub-portions 34 of the net-like structure 30 are coated by a later removable film. In this way, it is also selectively prevented that certain sub-portions of the net-like structure 30 are embedded in the cushioning sole layer 40.

Additionally, preferably the vertical sub-portions 32 of the net-like structure 30 are coated with glue according to a further embodiment of the manufacturing method. The glue provides a better connection between the embedded vertical sub-portions 32 and the cushioning sole layer 40, whereby the stability of the running shoe 1, in particular the sole 20, is improved.

During manufacture of a sole 20 according to the invention in which the net-like structure 30 terminates together with an outer surface of the sole 20 (i. e. no projecting vertical sub-portions 34), the inner surface 72 of the form tool 70 according to a further embodiment is structured such that during the subsequent moulding of the cushioning sole layer 40, a profile is imprinted in the outside of the sole 20.

After inserting the net-like structure 30 in the form tool 70, a sole slug made of a preferred material of the cushioning sole layer 40 is placed in the form tool 70.

Because of the force and the heat applied to the sole slug in the form tool 70, the material of the cushioning sole layer 40 flows in the contours given by the form tool 70 and bloats. On the basis of these vulcanization processes, the sole 20 according to the invention of the running shoe 1 is brought into its desired shape, wherein vertical sub-portions 32 of the net-like structure 30 are embedded into the cushioning sole layer 40. The material of the cushioning sole layer 40 penetrates into the knit fabrics and subsequently cures. After cooling and eventual post-vulcanizing corrections, a form stable, light sole 20 according to the present invention is obtained.

According to a further embodiment of the method according to the invention, the sole 20 is manufactured by an injection moulding process (see Fig. 6). In this embodiment the form tool 60 has an interior configured in the same way as the interior of the form tool used in the method of compression moulding. Therefore, the net-like structure 30 is also inserted in the same way in the form tool 60. After inserting the net-like structure 30, the material of the cushioning sole layer 40 is injected in the form tool 60 and it is vulcanized in order to achieve the desired shape. In this way, a form stable sole 20 of the running shoe 1 according to the invention is also provided.

Within the scope of the manufacturing method for the running shoe 1 according to the present invention, the upper 10 is attached to the sole 20 in a further processing step. For this, standard methods known from the prior art are used as, for example, gluing and/or stitching.

### List of reference signs

- 1: running shoe
- 10: upper
- 20: sole
- 30: net-like structure
- 32: vertical sub-portions
- 34: projecting vertical sub-portions
- 36: fiber
- 40: cushioning sole layer
- 50: profile ridges
- 60: injection moulding form tool
- 70: compression moulding form tool
- 72: inner surface of the form tool
- 74: complementary structure

## Claims

1. Shoe (1), in particular a running shoe comprising:
a. an upper (10) for accommodation and support of the foot, and a *cushioning* layer (40) of a sole (20) comprising a net-like structure (30) *of fibers*;
b. wherein sub-portions (32) of the net-like structure (30) *of fibers* are embedded into the *cushioning layer* of the sole (20), and wherein
c. remaining free portions (34) of said net-like structure (30) *of fibers* are in contact with the ground.

2. Shoe (1) according to claim 1, **characterized in that** said net-like structure (30) is formed by a three-dimensional structure made of at least one light, non-abrasive material with good grip.

3. Shoe (1) according to any of the preceding claims, **characterized in that** the net-like structure (30) consists of knitted threads (36) made of Polyester, Polyamid, Kevlar, Twaron, other plastic materials or metals.

4. Shoe (1) according to any of the preceding claims, **characterized in that** the net-like structure (30) extends beyond the bottom side of the sole (20) or terminates with it.

5. Shoe (1) according to any of the preceding claims, **characterized in that** the sole (20) comprises a cushioning sole layer (40) made of a conventional damping material, in particular EVA-, PU-, rubber foam or combinations thereof.

6. Method for manufacturing a shoe (1), in particular a running shoe, comprising the following steps:
a. inserting a net-like structure (30) *of fibers* in a form tool (70);
b. molding of a plastic material in said form tool (70) to provide a cushioning sole layer (40), wherein sub-portions (32) of the net-like structure (30) *of fibers* are embedded into said cushioning sole layer (40); and
c. attaching an upper (10) to said cushioning sole layer (40).

7. Method according to claim 6, **characterized in that** the net-like structure (30) is mounted on one of the inner surfaces (72) of the form tool (70).

8. Method according to claim 7, **characterized in that** the inner surface (72) of the form tool (70) is shaped in a way complementary to that of the net-like structure (30), for receiving the net-like structure (30).

9. Method according to one of the claims 6 to 8, **characterized in that** the inner surface (72) of the form tool (70) is structured so as to shape the bottom side of the cushioning sole layer (40).

10. Method according to one of the claims 6 to 9, **characterized in that** said moulding of said cushioning sole layer (40) in said form tool (70) connects said net-like structure (30) in such a manner with said cushioning sole layer (40) that a part (34) of the net-like structure (30) extends beyond the cushioning sole layer (40) or terminates with it.

11. Method according to claim 10, **characterized in that** the cushioning sole layer (40) is moulded in the form tool (70) by injection or compression moulding.

## Patentansprüche

1. Schuh (1) insbesondere ein Laufschuh, aufweisend:
a. ein Oberteil (10) zur Aufnahme und zum Stützen des Fußes und eine Dämpfungsschicht (40) einer Sohle (20), aufweisend eine netzartige Struktur (30) aus Fasern;
b. wobei Teilbereiche (32) der netzartigen Struktur (30) aus Fasern in die Dämpfungsschicht der Sohle (20) eingebettet sind; und wobei
c. verbleibende freie Bereiche (34) der netzartigen Struktur (30) von Fasern in Kontakt mit dem Boden sind.

2. Schuh (1) gemäß Anspruch 1, **dadurch gekennzeichnet, dass** die netzartige Struktur (30) durch eine dreidimensionale Struktur gebildet ist, die aus zumindest einem leichten, abriebfesten Material mit guter Griffigkeit hergestellt ist.

3. Schuh (1) gemäß einem der vorherigen Ansprüche, **dadurch gekennzeichnet, dass** die netzartige Struktur (30) aus geknüpften Strängen (36) aus Polyester, Polyamid, Kevlar, Twaron, anderen Kunststoffmaterialien oder Metallen besteht.

4. Schuh (1) gemäß einem der vorherigen Ansprüche, **dadurch gekennzeichnet, dass** die netzartige Struktur (30) sich über die Unterseite der Sohle (20) hinaus erstreckt oder mit ihr endet.

5. Schuh (1) gemäß einem der vorherigen Ansprüche, **dadurch gekennzeichnet, dass** die Sohle (20) eine dämpfende Sohlenschicht (40) aus einem konventionellen Dämpfungsmaterial im Speziellen EVA-, PU-, Gummischaum oder Kombinationen davon aufweist.

6. Verfahren zur Herstellung eines Schuhs (1), im Speziellen eines Laufschuhs, aufweisend die folgenden Schritte:
a. Einbringen einer netzartigen Struktur (30) aus Fasern in ein Formwerkzeug (70);
b. Formen eines Kunststoffmaterials in dem Formwerkzeug (70), um eine dämpfende Sohlenschicht (40) bereitzustellen, wobei Teilbereiche (32) der netzartigen Struktur (30) aus Fasern in die dämpfende Sohlenschicht (40) eingebettet sind; und
c. Befestigen eines Oberteils (10) an der dämpfenden Sohlenschicht (40).

7. Verfahren gemäß Anspruch 6, **dadurch gekennzeichnet, dass** die netzartige Struktur (30) an einer der inneren Oberflächen (72) des Formwerkzeugs (70) befestigt ist.

8. Verfahren gemäß Anspruch 7, **dadurch gekennzeichnet, dass** die innere Oberfläche (72) des Formwerkzeugs (70) in einer zu der netzartigen Struktur (30) komplementären Art und Weise geformt ist, um die netzartige Struktur (30) aufzunehmen.

9. Verfahren gemäß einem der Ansprüche 6 bis 8, **dadurch gekennzeichnet, dass** die innere Oberfläche (72) des Formwerkzeugs (70) strukturiert ist, um die Unterseite der dämpfenden Sohlenschicht (40) zu formen.

10. Verfahren gemäß einem der Ansprüche 6 bis 9, **dadurch gekennzeichnet, dass** das Formen der dämpfenden Sohlenschicht (40) in dem Formwerkzeug (70) die netzartige Struktur (30) in solch einer Art und Weise mit der dämpfenden Sohlenschicht (40) verbindet, dass ein Teil (34) der netzartigen Struktur (30) sich über die dämpfende Sohlenschicht (40) hinaus erstreckt oder mit ihr endet.

11. Verfahren gemäß Anspruch 10, **dadurch gekennzeichnet, dass** die dämpfende Sohlenschicht (40) in dem Formwerkzeug (70) durch Spritzgießen oder Kompressionsformen geformt wird.

## Revendications

1. Chaussure (1), en particulier une chaussure de sport comprenant :
a. une tige (10) pour loger et supporter le pied, et une couche matelassée (40) d'une semelle (20) comprenant une structure réticulaire (30) de fibres ;
b. dans laquelle des parties secondaires (32) de la structure réticulaire (30) de fibres sont incorporées dans la couche matelassée de la semelle (20), et dans laquelle
c. des parties libres restantes (34) de ladite structure réticulaire (30) de fibres sont en contact avec le sol.

2. Chaussure (1) selon la revendication 1, **caractérisée en ce que** ladite structure réticulaire (30) est formée par une structure tridimensionnelle faite d'au moins une matière légère non abrasive ayant une bonne adhérence.

3. Chaussure (1) selon l'une quelconque des revendications précédentes, **caractérisée en ce que** la structure réticulaire (30) est constituée de fils tricotés (36) faits de Polyester, de Polyamide, de Kevlar, de Twaron, d'autres matières plastiques ou de métaux.

4. Chaussure (1) selon l'une quelconque des revendications précédentes, **caractérisée en ce que** la structure réticulaire (30) s'étend au-delà du côté inférieur de la semelle (20) ou se termine avec lui.

5. Chaussure (1) selon l'une quelconque des revendications précédentes, **caractérisée en ce que** la semelle (20) comprend une couche de semelle matelassée (40) faite d'une matière d'amortissement classique, en particulier de l'EVA (copolymère d'éthylène / acétate de vinyle), de Pu (Polyuréthane), de mousse de caoutchouc ou des combinaisons de ceux-ci.

6. Procédé pour fabriquer une chaussure (1), en particulier une chaussure de sport, comprenant les étapes suivantes :
a. insertion d'une structure réticulaire (30) de fibres dans un outil de forme (70) ;
b. moulage d'une matière plastique dans ledit outil de forme (70) pour réaliser une couche de semelle matelassée (40), dans laquelle des parties secondaires (32) de la structure réticulaire (30) de fibres sont incorporées dans ladite couche de semelle matelassée (40) ; et
c. fixation d'une tige (10) à ladite couche de semelle matelassée (40).

7. Procédé selon la revendication 6, **caractérisé en ce que** la structure réticulaire (30) est montée sur une des surfaces internes (72) de l'outil de forme (70).

8. Procédé selon la revendication 7, **caractérisé en ce que** la surface interne (72) de l'outil de forme (70) a une forme dans un sens complémentaire à celle de la structure réticulaire (30), pour recevoir la structure réticulaire (30).

9. Procédé selon l'une des revendications 6 à 8, **caractérisé en ce que** la surface interne (72) de l'outil de forme (70) est structurée de façon à former le côté inférieur de la couche de semelle matelassée (40).

10. Procédé selon l'une des revendications 6 à 9, **caractérisé en ce que** ledit moulage de ladite couche de semelle matelassée (40) dans ledit outil de forme (70) relie ladite structure réticulaire (30) à ladite couche de semelle matelassée (40) de sorte qu'une partie (34) de la structure réticulaire (30) s'étend au-delà de la couche de semelle matelassée (40) ou se termine avec celle-ci.

11. Procédé selon la revendication 10, **caractérisé en ce que** la couche de semelle matelassée (40) est moulée dans l'outil de forme (70) par moulage par injection ou compression.
